# EUROPÄISCHE PATENTSCHRIFT

(11) **EP 2 036 851 B1**
(45) Veröffentlichungstag und Bekanntmachung des Hinweises auf die Patenterteilung: **03.11.2010**
(21) Anmeldenummer: 08015922.1
(22) Anmeldetag: 10.09.2008
(51) Int. Cl.: B66F 9/075, B62D 51/02

(54) **Mitfahrhubwagen**
Forklift with ride-on platform
Chariot de levage avec plateforme de conducteur

(30) Priorität: 11.09.2007 DE 102007043280
(43) Veröffentlichungstag der Anmeldung: 18.03.2009
(73) Patentinhaber: Jungheinrich Aktiengesellschaft, 22047 Hamburg (DE)
(72) Erfinder: Knie, Andreas, 22769 Hamburg (DE); Magens, Ernst-Peter, 22949 Ammersbek (DE); Mänken, Frank, 24558 Henstedt-Ulzburg (DE); Weber, Christoph, 24558 Henstedt-Ulzburg (DE)
(74) Vertreter: Graalfs, Edo

(56) Entgegenhaltungen:
- WO-A-2006/108531
- DE-A1- 10 311 344
- US-A- 5 265 021
- US-A- 5 325 935

## Beschreibung

Die Erfindung bezieht sich auf einen Mitfahrhubwagen nach Patentanspruch 1.

Bei einem Flurförderzeug ist seine Wendigkeit ein entscheidendes Merkmal. Sie wird im Wesentlichen bestimmt durch das sogenannte L2-Maß, dem Abstand zwischen Fahrzeugvorderseite und Gabelrücken. Die meisten Hubwagen sind sogenannte Mitgehfahrzeuge, bei denen eine Bedienung und Lenkung über eine schwenkbare Deichsel erfolgt. Es ist jedoch aus DE 601 17 956 D2 bekannt, an dem Antriebsteil des Flurförderzeugs eine Plattform herauszuklappen. Bei der Verwendung einer solchen Klapp-Plattform wird das L2-Maß deutlich vergrößert.

Aus DE 197 56 473 C1 ist bekannt geworden, die Deichsel eines Hubwagens außermittig anzuordnen und eine fest integrierte Standplattform am Rahmen des Antriebsteils innerhalb seiner Außenkonturen auf der der Deichsel gegenüberliegenden Seite anzuordnen, derart, dass der querstehende Fahrer mit einer Hand die Deichsel betätigen kann. Aus DE 103 11 344 A1 ist bekannt, die Oberseite des Antriebsteils für einen Mitfahrhubwagen als Standplattform auszubilden.

Aus DE 102 58 295 ist ein Hubwagen mit Fahrersitz bekannt geworden, bei dem der Fahrerplatz oberhalb der Antriebe untergebracht ist.

Den genannten Ausführungsformen ist gemeinsam, dass die Standplattformen oder der Sitzplatz eine hohe Einstieghöhe aufweisen. Dies ist unter anderem damit zu erklären, dass der Batterietrog mit als Stand- oder Sitzfläche genutzt wird.

Der Erfindung liegt die Aufgabe zugrunde, ein Flurförderzeug für den Mitfahrbetrieb zu schaffen, das ein sehr geringes L2-Maß und eine geringe Aufstiegshöhe aufweist.

Diese Aufgabe wird durch die Merkmale des Patentanspruchs 1 gelöst.

Bei dem erfindungsgemäßen Mitfahrhubwagen, insbesondere Gabelhubwagen, ist die Standplattform oberhalb des Antriebsteils angeordnet und der Fahrantrieb flachbauend ausgeführt. Der Fahrantrieb weist einen liegend angeordneten Fahrmotor als Radnabenantrieb für das Antriebsrad auf, z. B. ein Direktantrieb.

Bei der Erfindung ermöglicht die Anordnung des Antriebs sowie ihre kompakte Ausführung eine geringe Höhe des den Antrieb aufnehmenden Gehäuseraums des Antriebsteils, sodass die Aufstiegshöhe für die Standplattform sehr klein gehalten werden kann. Typischerweise beträgt die Einstiegshöhe 250 mm oder weniger. Da die Standplattform oberhalb des Antriebsteils angeordnet ist und dieses in seiner Länge gegenüber herkömmlichen Antriebsteilen nicht vergrößert ist, wird auch ein sehr kleines L2-Maß erhalten.

Neben dem Fahrmotor ist unterhalb der Standplattform ein Lenkmotor angeordnet, der über ein Lenkgetriebe mit einem Drehschemel für das Antriebsrad gekoppelt ist. Da der Lenkmotor relativ kleiner auszulegen ist, kann er ohne weiteres aufrecht im Antriebsteil angeordnet werden. Als Lenkgetriebe dient beispielsweise ein Riemen- oder Kettengetriebe, wobei der Drehschemel ein entsprechendes Riemen- oder Kettenrad in konzentrischer Anordnung aufweist.

Vorteilhafte Ausgestaltungen der Erfindung sind in Unteransprüchen angegeben.

In einer Ausgestaltung der Erfindung ist vorgesehen, dass beim Direktantrieb der Elektromotor axial die Nabe des Antriebsrades durchsetzt und der außen liegende Läufer des Elektromotors drehfest mit der Nabe verbunden ist. Bei Verwendung eines Radnabenantriebs sitzt der Elektromotor vorzugsweise einseitig an der Nabe.

Nach einer weiteren Ausgestaltung der Erfindung weist der erfindungsgemäße Hubwagen zwei Antriebsräder auf, die jeweils mit einem Fahrmotor versehen sind. Eine derartige Antriebsanordnung kommt dann in Betracht, wenn die Fahrleistung mit einem Motor nicht erreicht werden kann. Vorzugsweise wird in einem solchen Fall auch jedem Antriebsrad ein Lenkmotor zugeordnet.

Bei Niederhubwagen ist üblicherweise mit dem Antriebsteil ein aufrechter Mast, der zur Führung eines Lastrahmens dient. Bei herkömmlichen Mitfahrhubwagen ist in diesem Bauteil an seiner Oberseite eine Deichsel gelagert. Erfindungsgemäß erstreckt sich die Standplattform bis zum Mast bzw. zur Verkleidung des Mastes. Die Oberseite der Standplattform ist nach einer weiteren Ausgestaltung der Erfindung durchgehend plan.

Im Gegensatz zu deichselgeführten Hubwagen sieht eine weitere Ausgestaltung der Erfindung vor, dass beidseitig des Mastes bzw. seiner Verkleidung auf der der Standplattform zugekehrten Seite parallel beabstandete und annähernd horizontal erstreckte Stützarme vorgesehen sind, von denen mindestens einer Bedienelemente für den Hubwagen aufweist. Der auf der Standplattform stehende Bediener hält sich an mindestens einem Stützarm fest, wobei er gleichzeitig mit derselben Hand oder einer anderen Hand ein Bedienelement für den Hubwagen betätigen kann.

Nach einer weiteren Ausgestaltung der Erfindung ist auch ein elektrischer Lenkgeber an einem Stützarm gelagert. Der Lenkgeber kann so ausgeführt sein, dass mindestens ein weiteres Bedienelement am Lenkgeber gelagert ist, beispielsweise ein Fahrschalter.

Eine Ausführungsform der Erfindung wird nachfolgend anhand von Zeichnungen näher erläutert.
- Fig. 1: zeigt äußerst schematisch ein Mitfahrhubwagen nach der Erfindung in perspektivischer Darstellung,
- Fig. 2: zeigt eine Draufsicht auf den Hubwagen nach Figur 1 bei entfernter Standplattform.

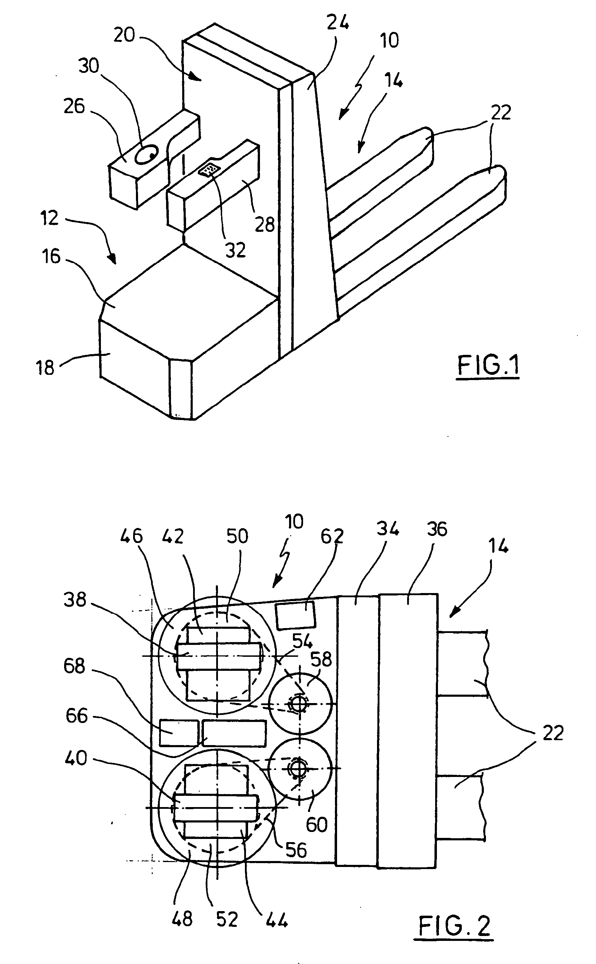

In Figur 1 ist ein Mitfahrhubwagen 10 dargestellt, der ein Antriebsteil 12 und ein Lastteil 14 aufweist. Das Antriebsteil 12 weist eine Standplattform 16 auf, von welcher sich nach unten eine seitliche Verkleidung 18 anschließt. Standplattform 16 und Verkleidung 18 umfassen einen Aufnahmeraum für einen Fahrantrieb und einen Lenkantrieb, wie nachfolgend noch beschrieben wird. Die Höhe der Standplattform 16 über Grund ist gering, maximal 250 mm.

An dem dem Lastteil 14 zugekehrten Ende weist das Antriebsteil ein aufrechtes Bauteil 20 auf, das als Verkleidung für einen nicht gezeigten Mast dient, der einen nicht gezeigten Lastrahmen führt, mit dem Gabelarme 22 fest verbunden sind. Mit Hilfe einer nicht gezeigten Hubvorrichtung kann der Lastrahmen und damit die Gabel um einen bestimmten Hub angehoben werden, um zum Beispiel eine Palette vom Boden anzuheben. Hierbei werden in bekannter Weise in den Gabelarmen 22 gelagerte Lastrollen (nicht gezeigt) automatisch nach unten geklappt. Innerhalb einer kastenförmigen Verkleidung 24 befindet sich eine Batterie zur Versorgung der elektrischen Antriebseinheiten, die mit dem Lastrahmen angehoben wird. Oberhalb der Standplattform 16 sind zwei parallel beabstandete Stützarme 26, 28 an der Verkleidung oder dem Mast angebracht, die sich annähernd horizontal erstrecken und dazu dienen, dem Fahrer eine Abstützung zu ermöglichen. Der Abstand der Stützarme 26, 28 kann derart sein, dass der Fahrer sich zwischen diesen aufhalten kann. Es ist natürlich auch möglich, die Stützarme 26, 28 kürzer auszuführen als in Figur 1 dargestellt.

An der Oberseite des Stützarms 26 ist ein Lenkgeber 30 für eine elektrische Lenkung des Flurförderzeugs 10 vorgesehen. Bei 32 befindet sich an der Oberseite des Stützarms 28 ein Bedienelement, beispielsweise für das Heben und Senken des Lastteils 14. Ein Fahrschalter kann in den Lenkgeber 30 integriert sein, was jedoch hier nicht dargestellt ist.

In Figur 2 ist bei 34 der Mast für den Lastrahmen angedeutet sowie eine Batterie 36, die auf der den Gabelarmen 22 zugekehrten Seite des Mastes 34 angeordnet und mit dem Lastrahmen anhebbar ist. Man erkennt in Figur 2 ferner zwei Antriebsräder 38, 40, die beabstandet entlang einer Querachse angeordnet sind. Jedem Antriebsrad 38, 40 ist ein elektrischer Direktantriebsmotor 42 bzw. 44 als Fahrmotor zugeordnet. Die Motoren 42, 44 sind sogenannte Außenläufer, d.h. der außen liegende Läufer ist drehfest mit dem Antriebsrad 38 bzw. 40 gekoppelt. Die Direktantriebsmotoren 42, 44 sind liegend angeordnet. Die Antriebsräder 38, 40 sind in Drehschemeln 46, 48 drehbar gelagert (nicht im Einzelnen dargestellt; ist allgemein bekannt). Zu jedem Drehschemel gehört ein Treibrad 50 bzw. 52, um das ein Treibelement 54 bzw. 56 geschlungen ist, das um ein Ritzel eines Lenkmotors 58 bzw. 60 geführt ist. Die Lenkmotoren 58, 60 sind ebenfalls elektrisch betrieben und weisen eine relativ geringe Bauhöhe auf. Sie ist geringer oder höchstens gleich groß wie die Vertikalerstreckung der Antriebsräder 38, 40. Hierbei muß die Oberkante des Lenkantriebs oberhalb des Fahrantriebs liegen, um die Bodenfreiheit des Lenkmotors 58, 60 zu gewährleisten.

Blöcke 62, 66, 68 enthalten Steuerungen für die Betätigung der Lenkmotoren 38, 40, der Fahrmotoren 42, 44 sowie für die Betätigung eines Hubaggregats für das Heben und Senken des Lastteils 10. Statt eines hydraulischen Hubaggregats kann eine elektrische Betätigungsvorrichtung vorgesehen werden.

## Patentansprüche

1. Mitfahrhubwagen (10) mit einem Antriebsteil (12) in dem ein mindestens einen elektrischen Fahrmotor (42, 44) aufweisender Fahrantrieb für mindestens ein gelenktes Antriebsrad (38, 40) angeordnet ist, einer Lenkvorrichtung für das Antriebsrad (38, 40) einem einen Mast (34) aufweisendem Lastteil (14) einer elektrischen Steuervorrichtung (62, 66, 68) für den Fahrantrieb und Bedienelementen für den Fahrantrieb und die Lenkvorrichtung (54, 56, 58, 60) und einer Standplattform (46) **dadurch gekennzeichnet, dass** unterhalb der Flachbauenden Standplattform (16) ein liegend angeordneter Fahrmotor (42, 44) als Radnabenantrieb für das Antriebsrad (38, 40) vorgesehen ist und unterhalb der Standplattform (16) ein Lenkmotor (58, 60) neben dem Fahrmotor (42, 44) angeordnet ist, der über ein Lenkgetriebe mit einem Drehschemel (50 ,52) für das Antriebsrad (38, 40) gekoppelt ist.

2. Mitfahrhubwagen nach Anspruch 1, **dadurch gekennzeichnet, dass** der Radnabenantrieb ein Direktantrieb ist.

3. Mitfahrhubwagen nach Anspruch 1 oder 2, **dadurch gekennzeichnet, dass** die Oberseite der Standplattform (16) durchgehend plan ausgeführt ist.

4. Hubwagen nach einem der Ansprüche 2 oder 3, **dadurch gekennzeichnet, dass** beim Direktantrieb der Elektromotor (42, 44) die Nabe des Antriebsrades (38, 40) axial durchsetzt und der außen liegende Läufer des Elektromotors (42, 44) drehfest mit der Radnabe verbunden ist.

5. Hubwagen nach einem der Ansprüche 1 bis 4, **dadurch gekennzeichnet, dass** zwei Antriebsräder (38, 40) mit jeweils einem Fahrmotor (42, 44) vorgesehen sind.

6. Hubwagen nach Anspruch 5, **dadurch gekennzeichnet, dass** jedem Antriebsrad (38, 40) ein Lenkmotor (58, 60) zugeordnet ist.

7. Hubwagen nach einem der Ansprüche 1 bis 6, **dadurch gekennzeichnet, dass** sich die Standplattform (16) bis zu einer Verkleidung (24) für den einen Lastrahmen fühlenden Mast erstreckt und eine Batterie (36) auf der die Standplattform (16) abgewandten Seite der Verkleidung (24) angeordnet ist.

8. Hubwagen nach Anspruch 6, **dadurch gekennzeichnet, dass** an einem aufrechten Bauteil (20) auf der der Standplattform (16) zugekehrten Seite parallel und annähernd horizontal erstreckte Stützarme (26, 28) angebracht sind, von denen mindestens einer Bedienelemente (32) für den Hubwagen (10) aufweist.

9. Hubwagen nach Anspruch 8, **dadurch gekennzeichnet, dass** ein elektrischer Lenkgeber (30) an einem Stützarm (26) gelagert ist.

10. Hubwagen nach Anspruch9, **dadurch gekennzeichnet, dass** mindestens ein weiteres Bedienelement am Lenkgeber (30) gelagert ist.

## Claims

1. A rider lift truck (10) with a drive portion (12), in which is arranged a travelling drive featuring at least one electric travelling motor (42, 44) for at least one steered driving wheel (38, 40), with a steering device for the driving wheel (38, 40), a load portion (14) featuring a mast (34), an electric control unit (62, 66, 68) for the travelling drive and operational controls for the travelling drive and the steering device (54, 56, 58, 60) and with a standing platform (16), **characterised in that** a recumbently arranged travelling motor (42, 44) is provided below the flatly built standing platform (16) as a wheel hub drive for the driving wheel (38, 40), and a steering motor (58, 60) is arranged below the standing platform (16) alongside to the travelling motor (42, 44), which is coupled to a fifth wheel (50, 52) for the driving wheel (38, 40) via a steering gear.

2. A rider lift truck according to claim 1, **characterised in that** the wheel hub drive is a direct drive.

3. A rider lift truck according to claim 1 or 2, **characterised in that** the upper side of the standing platform (16) is designed to be planar throughout its extent.

4. A rider lift truck according to any one of claims 2 or 3, **characterised in that** in the direct drive, the electric motor (42, 44) axially penetrates the hub of the driving wheel (38, 40), and the outside lying rotor of the electric motor (42, 44) is splinedly connected to the wheel hub.

5. A rider lift truck according to any one of claims 1 to 4, **characterised in that** two driving wheels (38, 40) are provided, each at a time with a travelling motor (42, 44).

6. A rider lift truck according to claim 5, **characterised in that** one steering motor (58, 60) is associated to each one of the driving wheels (38, 40).

7. A rider lift truck according to any one of claims 1 to 6, **characterised in that** the standing platform (16) extends up to a case (24) for the mast which guides a load frame, and a battery (36) is arranged on the side of the case (24) turned away from the standing platform (16).

8. A rider lift truck according to claim 6, **characterised in that** parallel and approximately horizontally extending supporting arms (26, 28) are arranged on a upstanding assembly part (20) on the side facing the standing platform (16), from which at least one features operational controls (32) for the lift truck (10).

9. A rider lift truck according to claim 8, **characterised in that** an electric steering transmitter (30) is mounted on a supporting arm (26).

10. A rider lift truck according to claim 9, **characterised in that** at least one further operational control is mounted on the steering transmitter (30).

## Revendications

1. Chariot de levage avec plateforme de conducteur (10), avec un composant d'entraînement (12), dans lequel est disposé un entraînement de voyage ayant au moins un moteur de voyage électrique (42, 44) pour au moins une roue motrice dirigée (38, 40), avec un dispositif de direction pour la roue motrice (38, 40), un composant de charge (14) ayant un mât (34), un dispositif de commande électrique (62, 66, 68) pour l'entraînement de voyage et des éléments de manoeuvre pour l'entraînement de voyage et pour le dispositif de direction (54, 56, 58, 60), et avec une plateforme debout (16), **caractérisé en ce que** au-dessous de la plateforme debout construite en forme plate (16), un moteur de voyage (42, 44) disposé de façon couchée est pourvu comme entraînement sur moyeu de roue pour la roue motrice (38, 40), et que au-dessous de la plateforme debout (16), un moteur de direction (58, 60) est disposé à côté du moteur de voyage (42, 44), qui est accouplé à un tabouret tournant (50, 52) pour la roue motrice (38, 40) à travers un renvoi de direction.

2. Chariot de levage avec plateforme de conducteur selon la revendication 1, **caractérisé en ce que** l'entraînement sur moyeu est un entraînement direct.

3. Chariot de levage avec plateforme de conducteur selon la revendication 1 ou 2, **caractérisé en ce que** le haut de la plateforme debout (16) est partout réalisé de façon plane.

4. Chariot de levage avec plateforme de conducteur selon l'une quelconque des revendications 2 ou 3, **caractérisé en ce que** dans l'entraînement direct, le moteur électrique (42, 44) axialement pénètre le moyeu de la roue motrice (38, 40) et quele rotor du moteur électrique (42, 44), situé à l'extérieur, est relié au moyeu de la roue de façon bloquée contre la rotation.

5. Chariot de levage avec plateforme de conducteur selon l'une quelconque des revendications 1 à 4, **caractérisé en ce que** deux roues motrices (38, 40) sont pourvues, chacune ayant un moteur de voyage (42, 44).

6. Chariot de levage avec plateforme de conducteur selon la revendication 5, **caractérisé en ce que** un moteur de direction (58, 60) est associé à chaque roue motrice (38, 40).

7. Chariot de levage avec plateforme de conducteur selon l'une quelconque des revendications 1 à 6, **caractérisé en ce que** la plateforme debout (16) s'étend jusqu'à un revêtement en tôle (24) pour le mât qui conduit un cadre de charge, et que une batterie (36) est disposée dans le côté du revêtement en tôle (24) tourné vers dehors de la plateforme debout (16).

8. Chariot de levage avec plateforme de conducteur selon la revendication 6, **caractérisé en ce que** des bras de support (26, 28) s'étendant en parallèle et à peu près horizontales sont montés dans un composant debout (20) sur le côte tourné vers la plateforme debout (16), dont au moins un présente des éléments de manoeuvre (32) pour le chariot de levage (10).

9. Chariot de levage avec plateforme de conducteur selon la revendication 8, **caractérisé en ce que** un transmetteur de direction électrique (30) est monté sur un bras de support (26).

10. Chariot de levage avec plateforme de conducteur selon la revendication 9, **caractérisé en ce que** au moins un autre élément de manoeuvre est monté sur le transmetteur de direction (30).
